# EUROPÄISCHE PATENTSCHRIFT

(11) **EP 2 830 814 B1**
(45) Veröffentlichungstag und Bekanntmachung des Hinweises auf die Patenterteilung: **04.12.2019**
(21) Anmeldenummer: 13714884.7
(22) Anmeldetag: 25.03.2013
(51) Int. Cl.: B23K 26/04, G02B 7/00, G02B 7/02, G02B 7/182

(54) **POSITIONIEREINRICHTUNG MIT EINEM ÜBERTRAGUNGSELEMENT FÜR EINE STELLBEWEGUNG EINES OPTISCHEN ELEMENTES, BEARBEITUNGSKOPF FÜR EINE LASERBEARBEITUNGSMASCHINE MIT SOLCHER POSITIONIEREINRICHTUNG**
POSITIONING DEVICE WITH A TRANSMISSION ELEMENT FOR A SETTING MOTION OF AN OPTICAL ELEMENT, PROCESSING HEAD FOR A LASER PROCESSING MACHINE HAVING SUCH POSITIONING DEVICE
DISPOSITIF DE POSITIONNEMENT AVEC UN ELÉMENT DE TRANSMISSION POUR UN MOUVEMENT DE RÉGLAGE D'UN ÉLÉMENT OPTIQUE, TÊTE DE TRAVAIL POUR UNE MACHINE D'USINAGE AU LASER COMPRENANT UN TEL DISPOSITIF DE POSITIONNEMENT

(30) Priorität: 26.03.2012 DE 102012102566
(43) Veröffentlichungstag der Anmeldung: 04.02.2015
(73) Patentinhaber: Trumpf Werkzeugmaschinen GmbH + Co. KG, 71254 Ditzingen (DE)
(72) Erfinder: BOETTCHER, Christian, 70565 Stuttgart (DE)
(74) Vertreter: Mammel und Maser
(86) Internationale Anmeldenummer: PCT/EP2013/056270
(87) Internationale Veröffentlichungsnummer: WO 2013/144084

(56) Entgegenhaltungen:
- US-A- 3 981 566
- US-A- 4 686 440
- US-A1- 2003 231 412
- US-A1- 2009 045 699
- US-A1- 2011 085 239
- US-A1- 2012 019 798
- US-B1- 6 498 892

## Beschreibung

Die Erfindung betrifft ein Übertragungselement zur Übertragung einer generierenden Ausgangsbewegung von einem Bewegungsantrieb in eine Stellbewegung auf ein optisches Element, eine Positioniereinrichtung sowie einen Bearbeitungskopf für eine Laserbearbeitungsmaschine mit einem solchen Übertragungselement.

Aus der DE 10 2008 030 783 B1 ist ein Verfahren zum Laserstrahlschrägschneiden eines Werkstückes sowie einer Laserbearbeitungsmaschine zur Durchführung des Verfahrens bekannt, bei dem ein aus einer Schneidgasdüse austretender Überschall-Schneidgasstrom unter einem Schrägschneidwinkel zur Werkstückoberfläche ausgerichtet wird. Dabei werden das Werkstück und der Laserschneidstrahl relativ zueinander bewegt, wobei der Schrägschneidwinkel rechtwinklig zu einer Vorschubrichtung verläuft. Während dieser Relativbewegung wird die Position des Laserschneidstrahls auf der Werkstückoberfläche so eingestellt, dass der Laserschneidstrahl in einem innerhalb des Überschall-Schneidgasstroms gebildeten Hochdruckbereiches auf die Werkstückoberfläche auftritt. Hierzu wird der Fokuspunkt des Laserstrahls mit Hilfe zumindest eines optischen Elements innerhalb der Schneiddüse exzentrisch zur Düsenachse eingestellt. Der Verstellbereich des Laserstrahls beträgt dabei wenige zehntel Millimeter, wobei die Positioniergenauigkeit des zumindest einen optischen Elementes im Bereich weniger Mikrometer liegt. Die Positionierung des Laserstrahls kann beispielsweise durch eine Drehung eines vor der Fokussieroptik angeordneten Strahlumlenkspiegels um dessen Strahlausfallachse bewirkt werden.

Aus der US 6,414,785 B1 ist eine Positioniereinrichtung für ein optisches Element bekannt, die zwei Festkörpergelenke aufweist, über die durch einen mittels jeweils einem Exzenter bewegten Hebelarm das optische Element bewegt und in einer Ebene senkrecht zu seiner optischen Achse verschoben wird. Die Verstellbewegung verläuft dabei in Richtung der Achse des Hebelarms. Der Hebelarm des Exzenters verläuft senkrecht zur Rotationsachse des Exzenters. Diese Anordnung weist den Nachteil auf, dass aufgrund der Einleitung des Antriebmomentes und der Anordnung der Festkörpergelenke in Verlängerung zum Hebelarm eine geringe Momentensteifigkeit gegeben ist, wodurch eine exakte und direkte Übertragung der Antriebsbewegung auf eine Verstellbewegung des optischen Elementes nicht möglich ist. Vielmehr kommt es zu einem Winkelfehler am Exzenter durch eine Momentenabstützung in dem Festkörpergelenk.

Aus der US 4,767,188 A ist eine Positioniereinrichtung bekannt, welche ein erstes und zweites Festkörpergelenk aufweist, um eine Verstellbewegung in einer XY-Ebene zu erzielen. Das erste Festkörpergelenk ist in der ersten Bewegungsrichtung - beispielsweise X-Richtung - steif und in der zweiten Bewegungsrichtung - beispielsweise Y-Richtung - elastisch. Das zweite Festkörpergelenk ist in der ersten Bewegungsrichtung elastisch und in der zweiten Bewegungsrichtung steif. Beide Festkörpergelenke sind in einer dritten Bewegungsrichtung, die senkrecht zur ersten und zweiten Bewegungsrichtung in der XY-Ebene ausgerichtet ist, steif.

Aus der US 2012/0019798 A1 ist ein Halter zur Aufnahme eines optischen Elementes bekannt, der drei Einstellelemente umfasst. Jedes der Einstellelemente weist ein erstes Festkörperelement auf, welches um eine X-Achse schwenkbar ist. Darüber hinaus ist ein weiteres Festkörperelement vorgesehen, welches in X-Richtung steif ist und um die Y-Achse gedreht werden kann, so dass für ein Kopfstück, welches an dem optischen Element angreift, eine Rotation um die Z-Achse möglich ist.

Aus der US 2009/045699 A1 ist eine Positioniervorrichtung bekannt, bei der ein erster Aktuator vorgesehen ist, der durch eine Stellbewegung in X-Richtung flexibel ansteuert und in den beiden weiteren Raumrichtungen steif ausgebildet ist und getrennt dazu ein zweiter Aktuator vorgesehen ist, der eine Stellbewegung in Y-Richtung flexibel ansteuert, wobei die beiden Stellbewegungen unabhängig voneinander ansteuerbar sind.

Aus der US 6,498,892 B1 geht eine Positioniervorrichtung zum Zusammenbau von optischen Elementen hervor. Dabei wird eine nur in eine Raumrichtung bewegbare Platte über eine Parallelogrammführung durch zwei Federn verfahrbar angesteuert, wobei zur Ansteuerung ein Festkörpergelenk vorgesehen ist, um die bewegbare Platte in eine Richtung verfahrbar anzusteuern.

Aus der US 3,981,566 A ist eine Spiegeleinstellung vorgesehen, welche gleich ausgerichtete Schwenkachsen aufweist, um den Spiegel mit einer Schwenkbewegung um eine Schwenkachse anzusteuern.

Aus der US 4,686,440 A ist eine Positioniervorrichtung bekannt, welche zwei parallel ausgerichtete flexible Biegezungen umfasst, die durch einen steifen Abschnitt beabstandet und in einer Ebene zueinander schiebbar sind. Die Verschiebebewegung wird durch einen elektrischen Antrieb angesteuert, um eine Parallelverschiebung oder eine Verkippung des zweiten steifen Elementes zum ersten steifen Element zu erhalten.

Aus der US 2003/0231412 A geht eine Vorrichtung zur Positionierung von optischen Elementen hervor. Das optische Element ist durch Befestigungselemente aufgenommen, so dass dieses optische Element um drei unabhängige Achsen und zusätzlich in translatorischer Weise in eine axiale Richtung veränderbar ist.

Darüber hinaus besteht bei solchen Anordnungen und Verstellungen von optischen Elementen in einer Strahlführung eines Laserstrahls, beispielsweise in einer Laserbearbeitungsmaschine, des Weiteren häufig das Problem, dass nur ein geringer Bauraum zur Verfügung steht, um einen sowohl mechanisch und thermisch stabilen als auch präzisen Verstellmechanismus bereitzustellen.

Der Erfindung liegt die Aufgabe zugrunde, eine Positioniereinrichtung und einen Bearbeitungskopf für eine Laserbearbeitungsmaschine bereitzustellen, bei denen eine präzise Übertragung einer generierenden Ausgangsbewegung von einem Bewegungsantrieb in eine Stellbewegung auf das optische Element mit einer geringen Beeinflussung durch thermisch bestimmten Längenausdehnungen ermöglicht ist.

Eine Positioniereinrichtung zum Bewegen eines optischen Elementes mit einem Bewegungsantrieb gemäß der Erfindung ist im Anspruch 1 definiert, wobei die Positioniereinrictung ein Übertragungselement mit einem ersten und zweiten Festkörpergelenk umfasst, wobei das erste Festkörpergelenk tangential zur Bewegungsbahn des Übertragungselementes in einer ersten Bewegungsrichtung innerhalb einer X-Y-Bewegungsebene mechanisch steif ausgebildet ist und in einer weiteren zweiten Bewegungsrichtung in der X-Y-Bewegungsebene eine geringe Steifigkeit aufweist und wobei das zweite Festkörpergelenk in der ersten Bewegungsrichtung des ersten Festkörpergelenkes mechanisch steif und in einer dritten Bewegungsebene senkrecht zur ersten und zweiten Bewegungsrichtung und nur zur X-Y-Bewegungsebene elastisch ausgeführt ist. Dieses Übertragungselement ermöglicht eine präzise Verstellbewegung des optischen Elementes und bewirkt, dass die in das Übertragungselement eingeleiteten Antriebsmomente beziehungsweise die eingeleitete Verstellbewegung von dem ersten Festkörpergelenk weitestgehend reaktionsarm, das heißt, aufgrund der mechanischen Steifigkeit direkt und unmittelbar auf das zweite Festkörpergelenk zur Einleitung in das optische Element übertragen werden und dass zumindest das zweite Festkörpergelenk thermisch bedingte Längenänderungen des Bewegungsantriebs oder des optischen Elements, minimiert oder ausgleicht. Dadurch kann die Anforderung erfüllt werden, dass eine hohe Präzision unter fortlaufenden Einsatzbedingungen gegeben ist, das heißt, dass diese Festkörpergelenke mit einer hohen Lastspielzahl beaufschlagbar sind und eine reproduzierbare Verstellbewegung des optischen Elementes ermöglicht wird.

Das Übertragungselement kann eine von dem Bewegungsantrieb eingeleitete Stellbewegung auf das optische Element übertragen, wobei eine Bewegungsbahn des ersten Festkörpergelenkes in einer Bewegungsebene liegt, welche durch die erste und senkrecht dazu weitere Bewegungsrichtung des ersten Festkörpergelenkes gebildet wird. Bevorzugt erfolgt die Einleitung eines Antriebsmomentes oder eine Stellbewegung entlang einer Raumrichtung beziehungsweise Bewegungsrichtung, so dass eine Verschiebebewegung des ersten Festkörpergelenkes innerhalb der Bewegungsebene - also zweidimensional - erfolgt.

Das erste Festkörpergelenk kann zumindest eine Biegezunge aufweisen, die in der ersten Bewegungsrichtung steif ist und eine Nutzbewegung überträgt sowie in der zweiten Bewegungsrichtung quer zur ersten Bewegungsrichtung nachgiebig ist und eine sogenannte parasitäre Bewegung aufgrund von Anteilen der Bewegung des Antriebs sowie des Übertragungselements, die nicht in Richtung der gewünschten Nutzbewegung wirken, herabsetzt. Durch diese konstruktive Maßnahme kann in einfacher Weise eine präzise Verstellbewegung erzeugt werden.

Zwischen dem ersten und zweiten Festkörpergelenk kann ein biegesteifes Koppelelement vorgesehen sein. Dieses Koppelelement ist bevorzugt in ersten und zweiten Bewegungsrichtung und senkrecht dazu starr, d.h. verformungssteif, ausgebildet. Dadurch wird die unmittelbar über den Bewegungsantrieb in das erste Festkörpergelenk eingeleitete Verstellbewegung in der ersten Bewegungsrichtung wiederum weitestgehend reaktionsarm, also unmittelbar, auf das zweite Festkörpergelenk übertragen. Dadurch kann eine Erhöhung in der Präzision der Verstellbewegung erzielt werden.

Das Koppelelement ist bevorzugt L-förmig ausgebildet, wobei an einem ersten Schenkel die zumindest eine Biegezunge des ersten Festkörpergelenkes angreift und an dem weiteren Schenkel das zweite Festkörpergelenk angeordnet ist. Dadurch kann ein kompakt bauendes Übertragungselement geschaffen werden, welches in zwei voneinander abweichenden Bewegungsrichtungen thermische Einflüsse, insbesondere Längendehnungen kompensiert.

Das erste Festkörpergelenk kann mit einem Ende an einem Halteelement, an welchem ein Antriebsmoment von einem Bewegungsantrieb einleitbar ist, angeordnet sein, wobei insbesondere ein Übergangsbereich zwischen dem Halteelement und der Biegezunge eine hohe Steifigkeit zur Übertragung der Antriebsbewegung des Bewegungsantriebes aufweist. Dadurch wird das Antriebsmoment im Antriebspunkt unmittelbar auf das erste Festkörpergelenk übertragen, ohne dass ein Ausweichen des Festkörpergelenkes aufgrund einer elastischen Wirkung eintreten kann. Dadurch kann eine Antriebsbewegung oder eine Stellbewegung des Bewegungsantriebes zur direkten Übertragung führen und weist somit eine hohe Reproduzierbarkeit auf.

Das erste Festkörpergelenk kann zwei parallel zueinander beabstandete Biegezungen aufweisen, die an dem Halteelement angreifen und an deren gegenüberliegenden Enden ein Koppelelement bzw. einen Schenkel des Koppelelements aufnehmen. Dadurch entsteht zwischen dem Halteelement und dem über die Biegezungen dazu positionierten Koppelelement eine Art Parallelogrammführung, die sowohl bei einer rotatorischen als auch einer translatorischen Antriebsbewegung des Bewegungsantriebes, die in das Übertragungselement eingeleitet wird, eine direkte Übertragung in eine Nutzbewegung beziehungsweise in eine erste Bewegungsrichtung ermöglicht. Darüber hinaus können thermische Einflüsse, insbesondere Längenänderungen, und Überlagerungen mit parasitären, also störenden Stellbewegungen, besonders herabgesetzt werden.

Das Haltelement, an welchem der Bewegungsantrieb angreift, kann symmetrisch zwischen den Biegezungen angeordnet sein. Dadurch wird wiederum eine kompakte und platzsparende Anordnung geschaffen.

Das Halteelement ist bevorzugt als Spannelement ausgebildet, welches an einer Antriebsachse des Bewegungsantriebs angreift, wobei vorzugsweise eine Spannkraft des Halteelements einstellbar ist. Hierzu weist das Halteelement eine geschlitzte Anordnung auf, wobei das Spaltmaß des Schlitzes mit Hilfe eines Befestigungselementes verringerbar ist, um eine Befestigung auf der Antriebsachse zu ermöglichen. Beim Einsatz von beispielsweise einem Exzenterlager auf der Antriebsachse des Bewegungsantriebes kann durch das Halteelement eine spielfreie Aufnahme des Exzenterlagers eingestellt werden.

Das zweite Festkörpergelenk kann zumindest eine Haltelasche umfassen, an dessen vom Koppelelement entfernten Bereich oder Ende das optische Element verdrehsicher zur Haltelasche anordenbar ist. Da das zweite Festkörpergelenk beziehungsweise die Haltelasche senkrecht zur ersten und zweiten Bewegungsrichtung elastisch geführt ist, wird durch Vorspannung des zweiten Festkörpergelenks eine vorgespannte Lagerung des optischen Elementes zum Übertragungselement ermöglicht, um das optische Element spielfrei aufzunehmen. Dadurch kann eine hohe Präzision bei der Bewegungsübertragung einer Stellbewegung auf das optische Element erzielt werden. Die Vorspannung ist dabei bevorzugt derart vorgesehen, dass trotz gegebenenfalls erfolgenden thermischen Längenänderungen der Komponenten eine Mindestvorspannung zur spielfreien Anordnung des optischen Elementes in einer Positioniereinrichtung oder eines Bearbeitungskopfes einer Laserbearbeitungsmaschine aufrecht erhalten bleibt.

Das Übertragungselement, welches aus einem ersten und zweiten Festkörpergelenk sowie einem Halteelement und einem Koppelelement besteht, kann einstückig oder in Teilen einstückig ausgebildet sein. Dies erweist sich insbesondere für die Herabsetzung von störenden Bewegungen, die durch thermische Längenausdehnungen bewirkt werden, als Vorteil.

Der Bewegungsantrieb weist eine Antriebsachse auf, mit der das Übertragungselement gekoppelt ist. Dadurch kann eine präzise Umsetzung des Antriebsmomentes beziehungsweise der generierenden Ausgangsbewegung für eine Verstellbewegung des optischen Elementes beispielsweise zur Einstellung der Strahlform und/oder der Strahllage eines Laserstrahls ermöglicht werden.

In dieser Positioniereinrichtung ist das zweite Festkörpergelenk des Übertragungselements derart vorgespannt angeordnet, dass es eine Kraft auf ein oder mehrere der Lager des Bewegungsantriebs, beispielsweise der Antriebsachse, und/oder des optischen Elements ausübt. Durch diese Kraftausübung wird eine spielfreie Lagerung der Antriebskomponenten und des optischen Elements erreicht, die für die präzise Verstellbewegung notwendig ist.

Die Positioniereinrichtung kann ergänzend einen Bewegungsantrieb aufweisen, der eine spielfrei gelagerte Antriebsachse aufweist. Dadurch kann nicht nur eine hochgenaue Übertragung der Ursprungsbewegung auf eine Stellbewegung oder Ansteuerbewegung auf das optische Element übertragen werden, sondern auch durch ein Messsystem am oder im Bewegungsantrieb die Winkellage der Antriebsachse erfasst werden, um die Stellbewegung des optischen Elementes anzusteuern.

Der Bewegungsantrieb ist gemäß der Erfindung als Exzenterantrieb ausgebildet, wobei ein Halteelement des Übertragungselementes die Antriebsachse senkrecht zur den Bewegungsrichtungen des Übertragungselementes aufnimmt. Bevorzugt werden Servoantriebe eingesetzt, die präzise ansteuerbar sind. Alternativ ist es jedoch auch denkbar, beispielsweise für die gelegentliche Justierung eines optischen Elements in einer Strahlführung, den Bewegungsantrieb über eine manuell bewegbare Welle zu realisieren.

Die Erfindung definiert weiter einen Bearbeitungskopf für eine Laserbearbeitungsmaschine zum Laserschneiden oder Laserschweißen eines Werkstückes (siehe Anspruch 11), bei welcher die Positioniereinrichtung nach einer der vorbeschriebenen Ausführungsformen zur Einstellung der Strahlform und/oder der Strahllage des optischen Elementes eingesetzt wird und eine Ausgangsbewegung des Bewegungsantriebs mit dem Übertragungselement auf eine Stellbewegung auf das optische Element überträgt, wobei das Übertragungselement ein erstes und zweites Festkörpergelenk umfasst. Innerhalb eines solchen Bearbeitungskopfes kann durch die Positioniereinrichtung eine Veränderung der Position des Laserschneidstrahls innerhalb einer Schneidgasdüse erfolgen. Insbesondere kann eine Anpassung der Position des Laserschneidstrahls beim Laserstrahlschrägschneiden erfolgen, so dass der Laserschneidstrahl in einem innerhalb des Überschall-Schneidgasstroms gebildeten Hochdruckbereiches auf die Werkstückoberfläche auftrifft. Eine solche Veränderung der Position des Laserschneidstrahls innerhalb einer Strahlführungskomponente kann auch bei anderweitigen Anwendungen von Vorteil sein. Beispielsweise kann das optische Element als Spiegel oder Auskoppelspiegel ausgebildet sein und dieser Spiegel zur Steuerung eines ausfallenden Strahles in seiner Position einstellbar sein. Darüber hinaus kann auch eine sogenannte Pointing-Justage erfolgen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines Bearbeitungskopfes mit einer erfindungsgemäßen Positioniereinrichtung,
Figur 2 eine schematische Schnittdarstellung des Bearbeitungskopfs,
Figur 3 ein schematischer Teilschnitt des Bearbeitungskopfes gemäß Figur 1,
Figur 4 eine schematische Ansicht entlang der Schnittlinie IV-IV in Figur 3,
Figuren 5b und c schematische Darstellungen eines Übertragungselements und
Figur 6 ein Bearbeitungskopf in einer Ansicht gemäß Figur 4, der nicht ein Teil der Erfindung darstellt.

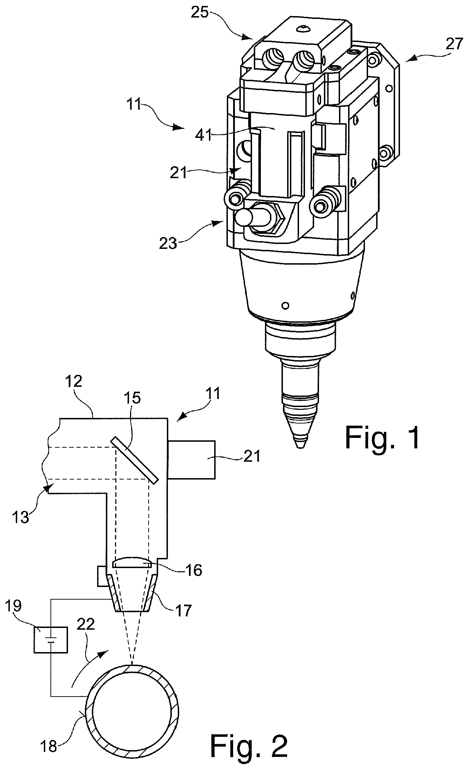

In Figur 1 ist perspektivisch ein Bearbeitungskopf 11 einer nicht näher dargestellten Laserbearbeitungsmaschine dargestellt. Die Figur 2 zeigt eine schematische Schnittdarstellung des Bearbeitungskopfes 11 mit einer daran angeordneten Strahlführung 12 mit zumindest einem optischen Element 15, über welches ein Laserstrahl 13 umgelenkt und über eine Fokussierlinse 16 fokussiert wird. Der Laserstrahl 13 tritt über die Schneidgasdüse 17 aus, um einen Schnitt im Werkstück 18 zu erzeugen. Zwischen dem Werkstück 18 und der Schneidgasdüse 17 ist eine Abstandsmesseinrichtung 19 vorgesehen, welche eine Potentialdifferenz zwischen dem metallischen Düsenkörper der Schneidgasdüse 17 und dem ebenfalls metallischen Werkstück 18 erzeugt. An dem Bearbeitungskopf 11 ist eine Positioniereinrichtung 21 vorgesehen, welche zumindest einen Bewegungsantrieb 41 umfasst und eine Messeinrichtung 23 zur Ansteuerung und Überwachung des Bewegungsantriebes 41 aufweisen kann. Im oberen Bereich des Bearbeitungskopfes 11 ist eine Kühlmittelzuführung 25 vorgesehen, um das zumindest eine im Bearbeitungskopf 11 angeordnete optische Element 15, insbesondere einen Umlenkspiegel, sowie gegebenenfalls daran angrenzende Komponenten, zu kühlen.

Das Werkstück 18 kann, wie in Figur 2 dargestellt ist, rohrförmig ausgebildet sein. Während der Bearbeitung kann das rohrförmige Werkstück 18 gemäß Pfeilrichtung 22 gedreht werden. Dies erfolgt auch beim Laserstrahlschrägschneiden, wie dies aus der DE 10 2008 030 783 B3 bekannt ist, auf welche Bezug genommen wird. Alternativ kann das Werkstück 18 auch plattenförmig ausgebildet sein und auf einer Werkstückauflage eines Grundgestells einer Laserbearbeitungsmaschine aufliegen oder entlang dieser bewegt werden.

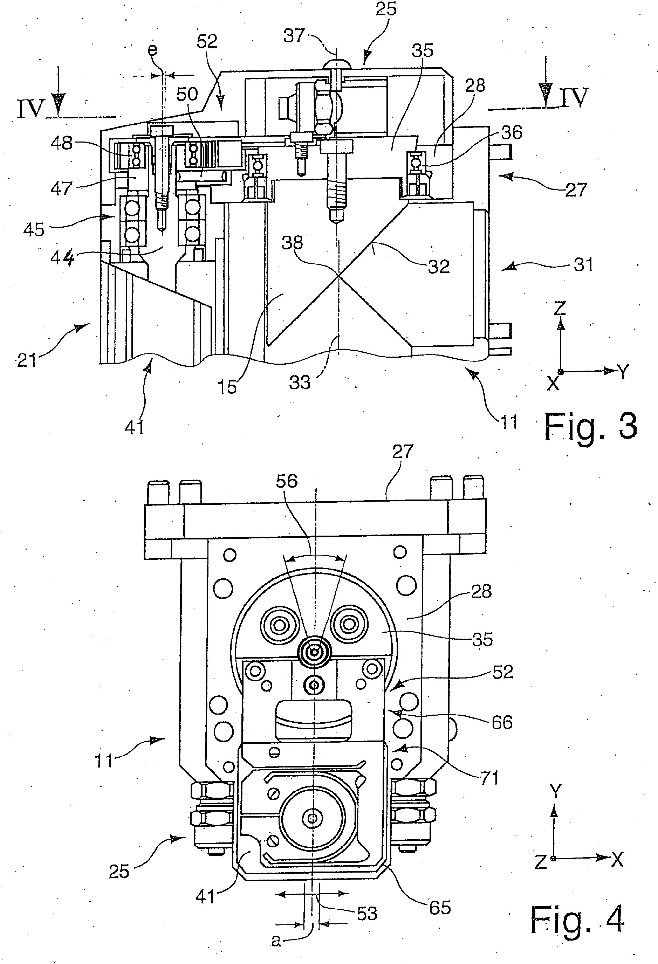

In Figur 3 ist eine schematische Schnittdarstellung eines oberen Teils des Bearbeitungskopfes 11 gemäß Figur 1 dargestellt. Der Bearbeitungskopf 11 weist einen Anschluss 27 an die Strahlführung 12 auf, die in Figur 3 nicht näher dargestellt ist. In einem Gehäuse 28 des Bearbeitungskopfes 11 ist das optische Element 15 als Umlenkspiegel angeordnet. Eine Strahleinfallachse 31 trifft auf eine Umlenkfläche 32 des optischen Elementes 15 und erzeugt eine Strahlausfallachse 33, entlang welcher der Laserstrahl 13 über die Schneidgasdüse 17 austritt. Das optische Element 15 ist an einer Aufnahme 35 befestigt, welche wiederum über ein Lager 36 zum Gehäuse 28 positioniert ist. Bevorzugt sind Wälzlager zur drehbaren Anordnung des optischen Elementes 15 um eine Hochachse 37 vorgesehen, welche einer Drehachse des optischen Elementes 15 entspricht, die deckungsgleich oder parallel und geringfügig versetzt zur Strahlausfallachse 33 des Laserstrahls 13 verläuft. An einem im Anschluss 27 gegenüberliegenden Abschnitt des Gehäuses 28 ist der Bewegungsantrieb 41 am Gehäuse 28 befestigt. Dieser Bewegungsantrieb 41 umfasst einen Servomotor mit der Messeinrichtung 23. Der Servomotor treibt eine Antriebsachse 44 an, welche durch ein oder mehrere Lager 45 im Gehäuse 28 drehbar gelagert ist. Bevorzugt ist eine spielfreie Lagerung, insbesondere Wälzlagerung der Antriebsachse 44 zum Gehäuse 28 vorgesehen.

Auf dem freien Ende der Antriebsachse 44 sitzt unmittelbar ein Exzenter 47, auf welchem ein weiteres Lager 48, insbesondere Wälzlager, angeordnet ist. An dem Exzenter 47 ist beispielsweise ein Endlagenanschlag 50 vorgesehen, der eine Drehbewegung der Antriebsachse 44 in zwei Endlagen im Gehäuse 28 begrenzt.

Zur Übertragung einer durch den Servomotor auf die Antriebsachse 44 generierenden Drehbewegung als Ausgangsbewegung zur Erzeugung einer Verstellbewegung des optischen Elementes 15 ist ein Übertragungselement 52 vorgesehen, welches den Bewegungsantrieb 41 mit dem optischen Element 15 verbindet. Dieses Übertragungselement 52 greift einerseits an der Aufnahme 35 des optischen Elementes 15 und andererseits an der Antriebsachse 44 beziehungsweise an dem auf der Antriebsachse 44 aufgebrachten Exzenter 47 an. Eine Exzentrizität e zur Erzeugung einer Ausgangsbewegung über den Exzenter 47, die auf das Übertragungselement 52 zur Erzeugung einer Verstellbewegung übertragen wird, ist in Figur 3 dargestellt.

Die Positioniereinrichtung 21 umfasst zumindest ein Übertragungselement 52 sowie einen Bewegungsantrieb 41. Bei der in Figur 3 dargestellten Ausführungsform gehören bspw. die Lager 45 und 48 sowie der Exzenter 47 zur Positioniereinrichtung 21.

In Figur 4 ist eine Ansicht von oben auf einen Schnitt entlang der Linie IV-IV in Figur 3 dargestellt. Durch eine Drehbewegung der Antriebsachse 44 wird über den Exzenter 47 mit der Exzentrizität e eine Auslenkung a erzeugt, wodurch das Übertragungselement 52 in einer Bewegungsebene in eine erste Bewegungsrichtung gemäß Pfeil 53 verfahren wird. Dadurch wird eine Stellbewegung gemäß Pfeil 56 als rotatorische Bewegung um die Hochachse 37 in das optische Element 15 eingeleitet. Somit wird bei diesem Ausführungsbeispiel mit einem rotatorischen Bewegungsantrieb 41 eine rotierende Antriebsbewegung als generierende Ausgangsbewegung in eine rotatorische Bewegung als Stellbewegung oder Ansteuerbewegung auf das optische Element 15 übertragen. Durch die Drehung des optischen Elements 15 gemäß Pfeil 56 um die Hochachse 37 wird eine genau vorgegebene Strahlneigung des Laserstrahls 13 bzw. eine genaue Verschiebung des Laserstrahl-Fokuspunkts unterhalb der Linse 16 erreicht.

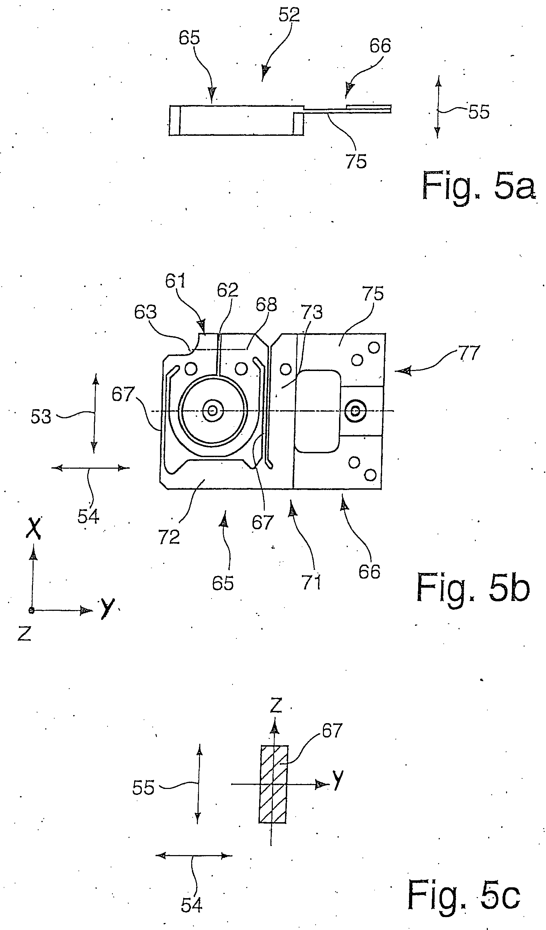

Die beispielhafte Ausgestaltung des Übertragungselementes 52 gemäß Figur 3 und 4 wird anhand der Figuren 5a, b und 5c näher beschrieben, die eine Seitenansicht und eine Ansicht von oben sowie eine Schnittansicht zeigen. Das Übertragungselement 52 umfasst ein Halteelement 61, welches mit der Antriebsachse 44 des Bewegungsantriebes 41 koppelbar ist. Hierfür ist das Halteelement 61 als Spannelement ausgebildet, welches einen Schlitz 62 umfasst, dessen Spaltmaß mit Hilfe eines Befestigungselementes 63 veränderbar ist, um eine feste Anordnung an der Antriebsachse 44 zu ermöglichen. Im Ausführungsbeispiel gemäß Figur 3, bei dem auf dem Exzenter 47 ein Wälzlager 48 angeordnet ist, wird durch das als Spannelement ausgebildete Halteelement 61 ermöglicht, dass durch Aufbringen einer vorbestimmten Spannkraft eine spielfreie Anordnung zwischen dem Exzenter 47 und dem Halteelement 61 über das Wälzlager 48 ermöglicht ist.

Über die Antriebsachse 44 wird das Übertragungselement 52 in einer Bewegungsebene verfahren, welche der X-Y-Ebene in Figur 4 bzw. Figur 5b entspricht.

Zur präzisen Übertragung einer Ausgangsbewegung des Bewegungsantriebs 41 auf eine Stellbewegung für das optische Element 15 weist das Übertragungselement 52 ein erstes Festkörpergelenk 65 und ein zweites Festkörpergelenk 66 auf, die fest miteinander verbunden sind. Das erste Festkörpergelenk 65 umfasst beispielhaft zwei Biegezungen 67, welche in der ersten Bewegungsrichtung gemäß Pfeil 53 in der Bewegungsebene steif und senkrecht zur ersten Bewegungsrichtung 53 innerhalb der Bewegungsebene in einer zweiten Bewegungsrichtung 54 elastisch auslenkbar sind. In einer dritten Bewegungsrichtung, senkrecht zur Bewegungsebene, welche durch Pfeil 55 dargestellt ist, sind die Biegezungen 67 ebenfalls steif ausgebildet. Hierzu weisen die Biegezungen 67 beispielsweise einen rechteckförmigen Querschnitt (Figur 5c) auf, der in Bewegungsrichtung 54 biegbar, jedoch in Bewegungsrichtung 53 sowie in Bewegungsrichtung 55 biegesteif ist. Bevorzugt sind zwei Biegezungen 67 symmetrisch zum Halteelement 61 angeordnet. Die Biegezungen 67 greifen in einem steifen Übergangsbereich 68 des Halteelementes 61 an, um das über die Antriebsachse 44 eingeleitete Antriebsmoment unmittelbar in die Biegezungen 67 einzuleiten. Die Biegezungen 67 sind parallel zum Halteelement 61 ausgerichtet und nehmen an dem dem Halteelement 61 gegenüberliegenden Enden ein Koppelelement 71 auf. Dieses Koppelelement 71 ist bevorzugt L-förmig ausgebildet und weist einen ersten Schenkel 72 auf, an dem die Biegezungen 67 befestigt sind oder übergehen. Dadurch wird eine Art Parallelogrammführung zwischen dem Halteelement 61 über die Biegezungen 67 zum ersten Schenkel 72 des Koppelelementes 71 geschaffen. In Pfeilrichtung 53 kann eine unmittelbare Übertragung der Ausgangsbewegung des Exzenters 47 in die Nutzungsbewegung erfolgen, wohingegen in der Bewegungsrichtung gemäß Pfeil 54 eine elastische Nachgiebigkeit gegeben ist, um sogenannte parasitäre Bewegungen auszugleichen. Im vorliegenden Beispiel sind die Bewegungskomponenten in Bewegungsrichtung 54, die aus der Drehbewegung des Exzenters 47 und des Übertragungselements 52 resultieren.

Das Koppelelement 71 weist den ersten und einen zweiten Schenkel 72, 73 auf, die zumindest in der Bewegungsebene mechanisch steif ausgebildet sind, das heißt, sowohl in der Bewegungsrichtung 53 als auch 54. Darüber hinaus kann das Koppelelement 71 auch in der Bewegungsrichtung gemäß Pfeil 55 steif ausgebildet sein. Dadurch kann eine direkte Übertragung des in das erste Festkörpergelenk 65 eingeleiteten Antriebsmoments oder der Antriebsbewegung über das Koppelelement 71 in das zweite Festkörpergelenk 66 erfolgen.

Das zweite Festkörpergelenk 66 umfasst zumindest eine Haltelasche 75, welche in der ersten und zweiten Bewegungsrichtung gemäß Pfeil 53, 54 mechanisch steif ausgebildet ist, jedoch in der weiteren Bewegungsrichtung gemäß Pfeil 55 elastisch nachgiebig ist. Hierzu ist die Haltelasche 75 in der Dicke gegenüber dem Koppelelement 71 stark verringert, um eine elastische Nachgiebigkeit auszubilden. Die Haltelasche 75 weist beispielsweise eine U-förmige Kontur auf, welche mit deren freien Schenkeln an dem Koppelelement 71 angreift. An einem Schenkelabschnitt 77 der Haltelasche 75 sind drei zueinander beabstandete und zueinander versetzte Bohrungen vorgesehen, durch welche eine Befestigung an der Aufnahme 35 erfolgt. Durch diese Anordnung wird gleichzeitig eine verdrehgesicherte Positionierung der Aufnahme 35 ermöglicht. Zusätzlich kann eine passgenaue Verstiftung der Haltelasche 75 zur Aufnahme 35 erfolgen. Das zweite Festkörpergelenk 66 gleicht thermische Längenausdehnungen sowohl des Bewegungsantriebs 41 oder der Welle 44 sowie des Umlenkspiegels 15 oder der Aufnahme 35 aus und stellt auf diese Weise die Präzision der Verstellbewegung sicher.

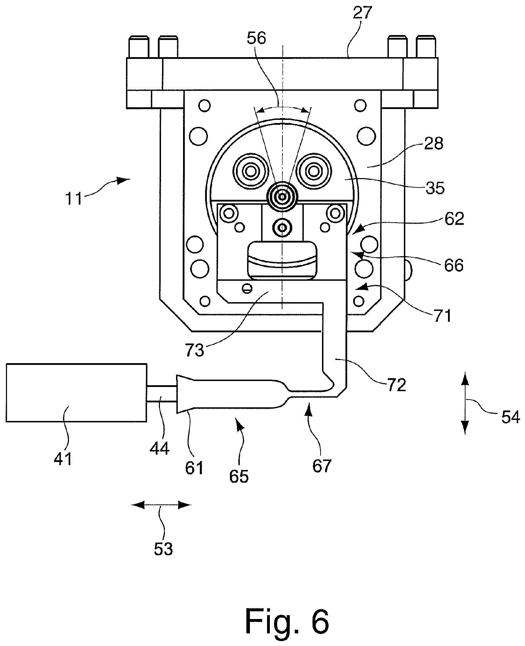

In Figur 6 ist eine alternative Form des Übertragungselementes 52 zu der in den Figuren 3 bis 5c dargestellten Ausführungsform gezeigt, die nicht ein Teil der Erfindung darstellt. Bei dieser Form des Übertragungselementes 52 ist vorgesehen, dass das erste Festkörpergelenk 65 nur eine Biegezunge umfasst, welche zwischen dem Halteelement 61 und dem Koppelelement 71 angeordnet ist. Bei dieser Ausführungsform ist vorgesehen, dass der Bewegungsantrieb 41 als Linearantrieb ausgebildet ist, welcher in der Bewegungsrichtung gemäß Pfeil 53 verfahrbar ist. Aufgrund dieser Bewegungsrichtung, die in der Längsachse der Biegezunge 67 liegt, kann wiederum eine unmittelbare Krafteinleitung und Bewegungsübertragung folgen, so dass eine präzise Ansteuerung gegeben ist. Das Koppelelement 71 und das zweite Festkörpergelenk 66 entsprechen der in den vorstehenden Figuren beschriebenen Ausführungsformen.

Bei dieser Form ist also vorgesehen, dass die Ursprungs- oder Ausgangsbewegung eine Linearbewegung ist, welche in eine rotatorische Verstellbewegung für das optische Element 15 umgesetzt wird.

## Patentansprüche

1. Positioniereinrichtung zum Bewegen eines optischen Elementes (15)
mit einem Bewegungsantrieb (41),
mit einem Übertragungselement (52) zur Übertragung einer Ausgangsbewegung des Bewegungsantriebs (41), die in das Übertragungselement (52) eingeleitet wird, in eine Stellbewegung auf das optische Element (15),
mit einer mit dem Übertragungselement (52) verbindbaren Aufnahme (35) für ein optisches Element (15) in einer X-Y-Bewegungsebene,
und mit zumindest einem ersten und zweiten Festkörpergelenk (65, 66), wobei
- das erste Festkörpergelenk (65) in einer ersten Bewegungsrichtung (53) innerhalb der X-Y-Bewegungsebene mechanisch steif ausgeführt ist und in einer weiteren zweiten Bewegungsrichtung (54) in der X-Y-Bewegungsebene eine geringe Steifigkeit aufweist, und
- das zweite Festkörpergelenk (66) in der ersten Bewegungsrichtung (53) des ersten Festkörpergelenkes (65) mechanisch steif und in einer dritten Bewegungsrichtung (55) senkrecht zur ersten und zweiten Bewegungsrichtung (53, 54) des ersten Festkörpergelenkes (65) und zur X-Y-Bewegungsebene des optischen Elementes (15) elastisch ausgebildet ist,
**dadurch gekennzeichnet,**
- **dass** der Bewegungsantrieb (41) eine Antriebsachse (44) aufweist, die mit dem Übertragungselement (52) gekoppelt ist,
- **dass** der Bewegungsantrieb (41) als Exzenterantrieb ausgebildet ist und dass ein Halteelement (61) des Übertragungselementes (52) die Antriebsachse (44) senkrecht zur Bewegungsebene des Übertragungselementes (52) aufnimmt, und
- **dass** das zweite Festkörpergelenk (66) des Übertragungselementes (52) derart vorgespannt angeordnet ist, dass es eine Kraft auf zumindest ein Lager (45, 48, 36) des Bewegungsantriebs (41) oder des optischen Elementes (15) oder auf beide ausübt.

2. Positioniereinrichtung nach Anspruch 1, **dadurch gekennzeichnet, dass** das erste Festkörpergelenk (65) zumindest eine Biegezunge (67) aufweist, die in der ersten Bewegungsrichtung (53) steif ist und eine Nutzbewegung überträgt und in einer Bewegungsrichtung (54) quer zur ersten Bewegungsrichtung (53) nachgiebig ist und eine parasitäre Bewegung herabsetzt.

3. Positioniereinrichtung nach einem der vorhergehenden Ansprüche, **dadurch gekennzeichnet, dass** zwischen dem ersten und zweiten Festkörpergelenk (65, 66) ein in der ersten und zweiten Bewegungsrichtung (53, 54) und senkrecht dazu starres, d. h. verformungssteifes, Koppelelement (71) vorgesehen ist.

4. Positioniereinrichtung nach Anspruch 3, **dadurch gekennzeichnet, dass** das Koppelelement (71) L-förmig ausgebildet ist, wobei an einem Schenkel (72) die zumindest eine Biegezunge des ersten Festkörpergelenkes (65) angreift und am anderen Schenkel (73) das zweite Festkörpergelenk (66) angeordnet ist.

5. Positioniereinrichtung nach einem der vorhergehenden Ansprüche, **dadurch gekennzeichnet, dass** das erste Festkörpergelenk (65) mit einem Ende an dem Halteelement (61), an welchem ein Antriebsmoment von dem Bewegungsantrieb (41) einleitbar ist, angeordnet ist.

6. Positioniereinrichtung nach dem vorhergehenden Anspruch, **dadurch gekennzeichnet, dass** das erste Festkörpergelenk (65) zwei parallel zueinander beabstandete Biegezungen (67) aufweist, zwischen denen das Halteelement (61) angeordnet ist, an dem der Bewegungsantrieb (41) angreift.

7. Positioniereinrichtung nach einem der Ansprüche 5 oder 6, **dadurch gekennzeichnet, dass** das Halteelement (61) als Spannelement ausgebildet ist, welches an der Antriebsachse (44) des Bewegungsantriebes (41) angreift und dessen Spannkraft einstellbar ist.

8. Positioniereinrichtung nach einem der vorhergehenden Ansprüche, **dadurch gekennzeichnet, dass** das zweite Festkörpergelenk (66) zumindest eine Haltelasche (75) aufweist, an der das optische Element (15) oder eine Aufnahme (35) des optischen Elementes (15) verdrehsicher anordenbar ist.

9. Positioniereinrichtung nach einem der vorhergehenden Ansprüche, **dadurch gekennzeichnet, dass** das erste und zweite Festkörpergelenk (65, 66), das Halteelement (61) und das Koppelelement (72) einstückig ausgebildet sind.

10. Positioniereinrichtung nach Anspruch 1, **dadurch gekennzeichnet, dass** der Bewegungsantrieb (41) eine spielfrei gelagerte Antriebsachse (44) aufweist.

11. Bearbeitungskopf für eine Laserbearbeitungsmaschine zum Laserschneiden oder-schweißen eines Werkstücks (18) mit einer Positioniereinrichtung (21) nach einem der Ansprüche 1 bis 10, **dadurch gekennzeichnet, dass** eine Verstellbewegung eines optischen Elementes (15) des Bearbeitungskopfes zur Einstellung einer Strahlform und/oder einer Strahllage eines Laserstrahls (13) mit dem Übertragungselement (52) angesteuert wird.

## Claims

1. Positioning device for the movement of an optical element (15) having a movement drive (41), a transfer element (52) for the transfer of an output movement of the movement drive (41), which is introduced into the transfer element (52), into an adjustment movement of the optical element (15), having a receiver (35), which is able to be connected to the transfer element (52) in a X-Y movement plane, for an optical element (15), and having at least one first and second flexure fulcrum (65, 66), wherein
- the first flexure fulcrum (65) is formed in a mechanically stiff manner in a first movement direction (53), tangentially to the movement path of the adjustment movement and has a low level of stiffness perpendicular to this in a further movement direction (54), and
- the second flexure fulcrum (66) is formed to be mechanically stiff in the first movement direction (53) of the first flexure fulcrum (65) and elastic in a third movement direction (55) perpendicular to the first and second movement direction (53, 54) of the first flexure fulcrum (65),
**characterised in that**
- the movement drive (41) has a drive axis (44) which is coupled to the transfer element (52),
- the movement drive (41) is formed as an eccentric drive and **in that** a support element (61) of the transfer element (52) receives the drive axis (44) perpendicular to the movement plane of the transfer element (52), and
- the second flexure fulcrum (66) of the transfer element (52) is arranged to be pre-stressed in such a way that it exerts a force on at least one bearing (45, 48, 36) of the movement drive (41) or of the optical element (15).

2. Positioning device according to claim 1, **characterised in that** the first flexure fulcrum (65) has at least one bending tongue (67), which is stiff in the first movement direction (53) and transfers a use direction and is flexible in a movement direction (54) that is transverse to the first movement direction (53) and reduces a parasitic movement.

3. Positioning device according to one of the preceding claims, **characterised in that** between the first and second flexure fulcrums (65, 66), a coupling element (71) is provided that is rigid, i.e. resistant to deformation, in the first and second movement direction (53, 54) and perpendicular thereto.

4. Positioning device according to claim 3, **characterised in that** the coupling element (71) is formed to be L-shaped, wherein the at least one bending tongue of the first flexure fulcrum (65) engages with an arm (72) and the second flexure fulcrum (66) is arranged on the other arm (73).

5. Positioning device according to one of the preceding claims, **characterised in that** the first flexure fulcrum (65) is arranged with one end on the support element (61) on which the drive torque is able to be introduced by a movement drive (41).

6. Positioning device according to the preceding claim, **characterised in that** the first flexure fulcrum (65) has two bending tongues (67) in parallel at a distance to each other, between which the support element (61) is arranged, with which the movement drive (41) engages.

7. Positioning device according to one of claims 5 to 6, **characterised in that** the support element (61) is formed as a clamping element, which engages with the drive axis (44) of the movement drive (41) and is able to adjust the clamping power thereof.

8. Positioning device according to one of the preceding claims, **characterised in that** the second flexure fulcrum (66) has at least one fixing bracket (75), on which the optical element (15) or a receiver (35) of the optical element (15) is able to be arranged so that it is not able to rotate.

9. Positioning device according to one of the preceding claims, **characterised in that** the first and second flexure fulcrum (65, 66), the support element (61) and the coupling element (72) are formed integrally.

10. Positioning device according to claim 1, **characterised in that** the movement drive (41) has a drive axis (44) that is mounted so that it is clearance free.

11. Processing head for a laser processing machine for the laser cutting or welding of a work piece (18), having a positioning device (21) according to one of claims 1 to 10, **characterised in that** an adjustment movement of an optical element (15) of the processing head for the setting of a beam shape and/or a beam position of a laser beam (13) is able to be controlled with the transfer element (52) .

## Revendications

1. Dispositif de positionnement destiné à déplacer un élément optique (15), pourvu d'un actionneur de mouvement (41), pourvu d'un élément de transmission (52) destiné à transmettre un mouvement initial de l'actionneur de mouvement (41) qui est appliqué audit élément de transmission (52) en un mouvement de réglage destiné à régler l'élément optique (15), pourvu d'une réception (35) pour un élément optique (15) laquelle est située dans un plan de mouvement X-Y et peut être reliée à l'élément de transmission (52), et pourvu d'au moins une première et une deuxième articulation à corps solide (65, 66),
- la première articulation à corps solide (65) étant formée de manière à être mécaniquement rigide dans un premier sens de mouvement (53) à l'intérieur du plan de mouvement X-Y et présentant, à l'intérieur dudit plan de mouvement X-Y, une faible rigidité dans un deuxième sens de mouvement (54), et
- la deuxième articulation à corps solide (66) étant formée de manière à être mécaniquement rigide dans le premier sens de mouvement (53) de la première articulation à corps solide (65) et à être élastique dans un troisième sens de mouvement (55) qui est perpendiculaire au premier et au deuxième sens de mouvement (53, 54) de la première articulation à corps solide (65) ainsi qu'au plan de mouvement X-Y de l'élément optique (15),
**caractérisé en ce que**
- l'actionneur de mouvement (41) présente un axe d'entraînement (44) qui est couplé à l'élément de transmission (52),
- l'actionneur de mouvement (41) est réalisé en tant qu'actionneur à excentrique et qu'un élément de retenue (61) de l'élément de transmission (52) reçoit l'axe d'entraînement (44) perpendiculairement au plan de mouvement de l'élément de transmission (52), et
- la deuxième articulation à corps solide (66) de l'élément de transmission (52) est disposée en précontrainte de manière à exercer une force donnée sur au moins un palier (45, 48, 36) de l'actionneur de mouvement (41) ou de l'élément optique (15) ou sur les deux à la fois.

2. Dispositif de positionnement selon la revendication 1, **caractérisé en ce que** la première articulation à corps solide (65) présente au moins une languette flexible (67) qui est rigide dans le premier sens de mouvement (53), et transmet ainsi un mouvement utile, et qui est souple dans un sens de mouvement (54) transversal audit premier sens de mouvement (53), et réduit ainsi un mouvement parasitaire.

3. Dispositif de positionnement selon l'une quelconque des revendications précédentes, **caractérisé en ce qu'**entre la première et la deuxième articulation à corps solide (65, 66) est prévu un élément de couplage (71) qui est rigide, c'est-à-dire résistant à la déformation, dans le premier et le deuxième sens de mouvement (53, 54) et perpendiculairement à ceux-ci.

4. Dispositif de positionnement selon la revendication 3, **caractérisé en ce que** l'élément de couplage (71) est réalisé en forme de L, ladite au moins une languette flexible de la première articulation à corps solide (65) appuyant sur une branche (72) et la deuxième articulation à corps solide (66) étant disposée sur l'autre branche (73) .

5. Dispositif de positionnement selon l'une quelconque des revendications précédentes, **caractérisé en ce qu'**une extrémité de la première articulation à corps solide (65) est disposée sur l'élément de retenue (61) au niveau duquel peut être appliqué un couple d'entraînement résultant de l'actionneur de mouvement (41).

6. Dispositif de positionnement selon l'une quelconque des revendications précédentes, **caractérisé en ce que** la première articulation à corps solide (65) présente deux languettes flexibles (67) parallèles, disposées à une distance donnée l'une de l'autre et entre lesquelles est disposé l'élément de retenue (61) contre lequel appuie l'actionneur de mouvement (41) .

7. Dispositif de positionnement selon l'une quelconque des revendications 5 ou 6, **caractérisé en ce que** l'élément de retenue (61) est réalisé en tant qu'élément de serrage qui appuie contre l'axe d'entraînement (44) de l'actionneur de mouvement (41) et dont la force de serrage est réglable.

8. Dispositif de positionnement selon l'une quelconque des revendications précédentes, **caractérisé en ce que** la deuxième articulation à corps solide (66) présente au moins une patte de retenue (75) sur laquelle peut être disposé(e) l'élément optique (15) ou une réception (35) de l'élément optique (15) de manière à ne pas tourner.

9. Dispositif de positionnement selon l'une quelconque des revendications précédentes, **caractérisé en ce que** la première et la deuxième articulation à corps solide (65, 66), l'élément de retenue (61) et l'élément de couplage (72) sont formés en une seule pièce.

10. Dispositif de positionnement selon la revendication 1, **caractérisé en ce que** l'actionneur de mouvement (41) présente un axe d'entraînement (44) qui est logé sans jeu.

11. Tête d'usinage pour une machine d'usinage au laser destinée à couper ou souder au laser une pièce à usiner (18), pourvue d'un dispositif de positionnement (21) selon l'une quelconque des revendications 1 à 10, **caractérisée en ce qu'**un mouvement de réglage d'un élément optique (15) de la tête d'usinage est activé grâce à l'élément de transmission (52) en vue de régler une forme de jet et/ou une position de jet d'un rayon laser (13) .
